# EUROPÄISCHE PATENTANMELDUNG

(11) **EP 2 883 484 A1**
(43) Veröffentlichungstag der Anmeldung: **17.06.2015**
(21) Anmeldenummer: 15150138.4
(22) Anmeldetag: 06.01.2015
(51) Int. Cl.: A47J 43/07

(54) **Elektromotorisch angetriebene Küchenmaschine**

(30) Priorität: 17.01.2014 DE 102014100515
(71) Anmelder: Vorwerk & Co. Interholding GmbH, 42275 Wuppertal (DE)
(72) Erfinder: Cornelißen, Markus, 53332 Bornheim (DE)
(74) Vertreter: Müller, Enno

(57) **Zusammenfassung**

Die Erfindung betrifft zunächst eine elektromotorisch angetriebene Küchenmaschine (1) mit einem Rührgefäß (5) und einem eine Rührwerkachse aufweisenden Rührwerk (6) in dem Rührgefäß (5). Weiter betrifft die Erfindung eine Kombination aus einer elektromotorisch angetriebenen Küchenmaschine, die ein Rührgefäß (5) und ein Rührwerk (6) mit einer Rührwerkachse aufweist, und einem Unterlegteil (27), das eine Aufstellfläche (28) für die Küchenmaschine (1) und eine Unterfläche (30) aufweist. Um eine Küchenmaschine (1) mit einem Rührwerk (6) anzugeben, gegebenenfalls in Kombination mit einem Unterteil (27), die bei geringer Füllung des Rührgefäßes (5) noch eine gute Einwirkung des Rührwerks (6) auf ein Rührgut ermöglicht, wird vorgeschlagen, dass das Rührgefäß (5) zur Durchführung eines Rührvorganges, ggf. zusammen mit der Küchenmaschine (1) im Übrigen, hinsichtlich der Ausrichtung der Rührwerkachse verstellbar vorgesehen ist und/oder dass die Aufstellfläche (28) des Unterlegteils (27) bezüglich der Unterfläche (30) keilförmig verläuft.

## Beschreibung

Die Erfindung betrifft zunächst eine elektromotorisch angetriebene Küchenmaschine mit einem Rührgefäß und einem eine Rührwerkachse aufweisenden Rührwerk in dem Rührgefäß.

Die Erfindung betrifft weiter eine Kombination einer elektromotorisch angetriebenen Küchenmaschine, die ein Rührgefäß und darin eine Rührwerkachse aufweisendes Rührwerk aufweist, und einem Unterlegteil, das eine Aufstellfläche für die Küchenmaschine und eine Unterfläche aufweist.

Küchenmaschinen der in Rede stehenden Art sind bekannt. Diese finden insbesondere Verwendung im Haushaltsbereich, weiter insbesondere zur Bearbeitung von Lebensmitteln, bspw. zum Zerkleinern oder Verrühren, darüber hinaus ggf. auch zum Zubereiten von Speisen. Eine derartige Küchenmaschine ist bspw. in der DE 102 10 442 A1 beschrieben. Aus der DE 102011000631 A1 ist ein Unterlegteil für eine Küchenmaschine mit einer Aufstellfläche und einer Unterfläche bekannt.

Derartige Küchenmaschinen weisen ein ggf. aus dem Gehäuse der Küchenmaschine entnehmbares Rührgefäß auf, in welchem Rührgefäß insbesondere bodenseitig ein Rührwerk vorgesehen ist. Dieses wird insbesondere in Zuordnungsstellung des Rührgefäßes in der Küchenmaschine durch einen küchenmaschinenseitigen Elektromotor angetrieben, wozu weiter bevorzugt eine lösbare Kupplung zwischen Rührwerk und Elektromotor vorgesehen ist. Eine hierbei gegebene Rührwerkachse, deren geometrische Achse auch bevorzugt einer Drehachse des Rührwerks entspricht, erstreckt sich in den bekannten Ausgestaltungen - mit Bezug auf die übliche Betriebsstellung der Küchenmaschine und des Rührgefäßes - in vertikaler Richtung, weiter insbesondere senkrecht zu einer Arbeitsfläche, auf welcher die Küchenmaschine aufsteht. Das Rührwerk weist weiter bevorzugt ausgehend von der Rührwerkachse sich im Wesentlichen radial erstreckende Rührwerkarme auf. Die Rührwerkarme können beispielsweise messerartig oder stabartig ausgebildet sein. Die Rührwerkarme enden mit radialem Abstand zu der Rührgefäß-Innenwandung.

Mitunter ist es erforderlich, im Hinblick auf ein üblicherweise genutztes Volumen des Rührgefäßes, nur sehr kleine Mengen zu verarbeiten. Bei Flüssigkeiten kann sich ein Flüssigkeitspegel ergeben, der von dem Rührwerk nicht mehr erreicht wird. Bei festeren Massen kann es zu einer Radialverteilung kommen, die gleichfalls eine gewünschte Einwirkung des Rührwerks nicht mehr oder nur mit geringer Wirkung erreichen lässt.

Ausgehend von dem dargelegten Stand der Technik beschäftigt sich die Erfindung mit der Aufgabe, eine Küchenmaschine mit einem Rührwerk anzugeben, gegebenenfalls in Kombination mit einem Unterteil, die bei geringer Füllung des Rührgefäßes noch eine gute Einwirkung des Rührwerks auf ein Rührgut ermöglicht.

Eine mögliche Lösung der Aufgabe ist nach einem ersten Erfindungsgedanken bei einer Küchenmaschine gegeben, bei welcher darauf abgestellt ist, dass das Rührgefäß zur Durchführung eines Rührvorganges, ggf. zusammen mit der Küchenmaschine im Übrigen, hinsichtlich der Ausrichtung der Rührwerkachse verstellbar vorgesehen ist.

Gemäß einer weiteren möglichen Lösung der Aufgabe ist vorgesehen, dass hinsichtlich der Kombination der Küchenmaschine und des Unterlegteils die Aufstellfläche des Unterlegteils bezüglich der Unterfläche keilförmig verläuft. Die Aufstellfläche braucht hierbei nicht im Sinne einer Ebene ausgebildet zu sein. Sie kann auch nur einzelne Erhebungen aufweisen, die im Hinblick auf das Aufstellen der Küchenmaschine auf die Aufstellfläche zusammengefasst bezüglich der Auflagebereiche der Küchenmaschine die genannte Aufstellfläche in keilförmiger Anordnung zu der Unterfläche ergeben. Die Unterfläche des Unterlegteils ist diejenige Fläche, die bei üblichem Gebrauch beispielsweise auf einer Arbeitsfläche, insbesondere in einer Küche, zur Auflage kommt.

Hinsichtlich der verstellbaren Ausrichtung der Rührwerkachse ist bei einer ersten Ausbildung das Rührwerk mit dem Rührgefäß in bekannter Weise fest verbunden ist und eine Verstellung der Ausrichtung der Rührwerkachse zusammen mit bzw. erreicht durch eine entsprechende Verstellung des Rührgefäßes mit dem darin befindlichen Rührwerk erreicht. Entsprechend ist hierbei die Rührwerkachse in ihrer Relativlage zum Rührgefäß bzw. zu der Rührgefäßachse unverändert.

In weiter bevorzugter Ausgestaltung verläuft die Rührwerkachse in einer verstellten Ausrichtung in einem spitzen Winkel zu einer Senkrechten wie sie der Ausrichtung der Rührwerkachse in der Normal- bzw. Ausgangsstellung entspricht. Bezogen auf eine horizontale Arbeitsfläche, auf welcher eine derartige Küchenmaschine üblicherweise aufsteht, ist entsprechend auch eine Ausrichtung in einem spitzen Winkel zu einer Senkrechten auf die Arbeitsfläche gegeben.

Durch eine solche Verstellmöglichkeit der Ausrichtung der Rührwerkachse bzw. der Rührgefäßachse lässt sich vorteilhaft auch eine günstige Einwirkung des Rührwerks auf ein Rührgut erreichen, das in vergleichsweise sehr kleinen Mengen nur im Rührgefäß vorhanden ist. Durch den dann geneigt bezogen auf die genannte Senkrechte verlaufenden Rührgefäßboden ergibt sich in einem dann nur noch einen kleinen Teil der Grundfläche des Rührgefäßes einnehmenden Bereich ein erhöhter Füllstand, der durch Messer, Rührschaufeln oder dergleichen des Rührwerkes wieder günstig erreicht werden kann.

In einer weiter bevorzugten Ausgestaltung ist vorgesehen, dass das Rührgefäß zusammen mit dem das Rührwerk antreibenden Motor hinsichtlich der Ausrichtung der Rührwerkachse verstellbar ist. Der Motor, insbesondere die Motorwelle ist in bevorzugter Ausgestaltung über eine lösbare Kupplung mit dem Rührwerk des Rührgefäßes verbunden, um so eine Entnahme des Rührgefäßes mit dem Rührwerk aus der Küchenmaschine zu ermöglichen. Eine Neigungsverstellung des Rührgefäßes mit dem Rührwerk führt in bevorzugter Ausgestaltung zu einer entsprechenden (Mit-)Verschwenkung der gekoppelten Motorwelle und hierüber bevorzugt auch des Elektromotors in der Küchenmaschine.

Bevorzugt verstellt sich hierbei der Elektromotor relativ zum Gehäuse der Küchenmaschine. Hierbei kann auch eine nicht verstellbare Anordnung des Elektromotors im Hinblick auf das Gehäuse der Küchenmaschine vorgesehen sein. Es kann vorgesehen sein, dass eine Verstellung der Rührwerkachse einhergeht mit einer entsprechenden winkelmäßigen Verstellung des Elektromotors zusammen mit dem Gehäuse der Küchenmaschine. Zumindest zusammen mit einem Teilabschnitt des Gehäuses der Küchenmaschine.

In einer Seitenansicht auf die Küchenmaschine, senkrecht zu einer Verstellebene, die durch die unverstellte Rührwerkachse und die verstellte Rührwerkachse aufgespannt ist, schließt die verstellte Rührwerkachse mit der unverstellten Rührwerkachse bevorzugt einen Winkel ein, der 3° oder mehr beträgt. Die Verstellbarkeit ist weiter bevorzugt ausgehend von einer Vertikalen beziehungsweise der unverstellten Rührwerkachse in beiden zu beiden Richtungen hin gleichermaßen gegeben. In bevorzugter Ausgestaltung ist eine Verstellung möglich, die bis hin zu dem Einschluss eines Winkels von 90° zwischen der verstellten und der unverstellten Rührwerkachse geht, weiter bevorzugt bis hin zu 45° oder 60°.

In einer bevorzugten Ausgestaltung weist die Küchenmaschine drei oder mehr Füße auf, über welche Füße die Küchenmaschine auf einer Arbeitsfläche oder dergleichen aufstellbar ist. Hierbei ist weiter bevorzugt, dass jedenfalls ein Fuß zur Verstellung der Rührwerkachse verstellbar ist. Die Verstellung kann sich zunächst durch ein Wegschwenken des Fußes ergeben. Die Küchenmaschine steht so dann bis zu dem Maß, um welches der Fuß ansonsten unterseitig über eine Unterfläche der Küchenmaschine hinausragt, geneigt. Eine weiter bevorzugte Ausgestaltung sieht vor, dass ein oder mehrere der Füße in ihrer Längserstreckung veränderbar sind, insbesondere verlängerbar. Durch eine Verlängerung des Fußes ergibt sich mithin ein vergrößerter Abstand einer Aufsetzfläche des Fußes relativ zu der Unterfläche der Küchenmaschine, von welcher der Fuß ausgehend sich erstreckt.

Durch diese Verstellbarkeit eines oder mehrerer der Füße der Küchenmaschine ist weiter bevorzugt eine gleiche Verstellung der Rotorwellenachse erreichbar, wie zuvor hinsichtlich der Winkel bereits angegeben.

Eine in üblicher Arbeitsstellung der Küchenmaschine horizontal ausgerichtete Unterfläche der Küchenmaschine erstreckt sich entsprechend im Falle eines längenverstellten Fußes in einer geneigten Ebene.

In weiterer möglicher Ausgestaltung, die allein, aber auch in Kombination mit einem oder mehreren der vorbeschriebenen Merkmale Bedeutung hat, weist die Küchenmaschine ein Verstellteil und ein Standteil auf, wobei das Verstellteil zumindest das Rührgefäß mit dem Rührwerk und den Motor umfasst, wobei weiter zur Veränderung der Ausrichtung der Rührwerkachse nur das Verstellteil zu verstellen ist. Das Verstellteil ist hierbei bevorzugt ein relativ zu dem Standteil beweglicher, insbesondere verschwenkbarer Abschnitt des Gehäuses. In weiter bevorzugter Ausgestaltung formt das Verstellteil zumindest eine Rührgefäßaufnahme aus, zur entsprechenden Aufnahme und Halterung des Rührgefäßes.

Das Verstellteil ist mit dem Standteil bevorzugt über eine Verstellachse bewegbar verbunden. Die Verstellachse verläuft hierbei bevorzugt senkrecht zu einer Verstellebene des Rührgefäßes, welche Verstellebene weiter bevorzugt senkrecht ausgerichtet ist zu einer durch die Aufstellflächen der Füße aufgespannten Aufstellebene.

Hierbei kann jedenfalls die geometrische Achse der Verstellachse in einer Ausgestaltung das Rührgefäß durchsetzen, sodass entsprechend diesbezügliche Achskörper zwischen Verstellteil und Standteil in einer Projektion auf die Verstellebene sich innerhalb des (eingesetzten) Rührgefäßes erstrecken. Hierbei ist weiter bevorzugt eine Anordnung gewählt, bei welcher die geometrische Verstellachse das Rührgefäß etwa mittig bezogen auf die vertikale Höhenerstreckung des Rührgefäßes durchsetzt.

Die Verstellachse kann auch unterhalb des Rührgefäßes verlaufen. Hierbei kann es sich gegebenenfalls um eine durchgehende Verstellachse handeln, die einen Bereich unterhalb des Rührgefäßes durchsetzt.

In bevorzugter Ausgestaltung weist die Küchenmaschine vorderseitig Bedienelemente oder sonstige zur Bedienung der Küchenmaschine vorgesehene Bereiche auf. Diese Vorderseite ist in üblicher Benutzungsstellung dem Nutzer zugewandt angeordnet und weist bevorzugt ein Stellelement oder ein zur entsprechenden Verstellung geeignetes Mittel auf, bspw. zur Einstellung einer Rührwerkdrehzahl oder einer Heiztemperatur. Die Verstellachse verläuft hierbei bevorzugt zugeordnet einer Rückseite der Küchenmaschine. Bezogen auf eine mittlere Vertikalachse des Rührgefäßes ist die Verstellachse - gesehen von der Vorderseite - nach hinten versetzt angeordnet.

Weiter bevorzugt verläuft die Verstellachse in einer Seitenansicht der Küchenmaschine außerhalb des Rührgefäßes. Die Seitenansicht entspricht hierbei einer Ansicht der Küchenmaschine, in welcher die geometrische Verstellachse als Punkt erscheint. Die Projektionsfläche des Rührgefäßes ist auf einen größten Durchmesser des Rührgefäßes bezogen, der üblicherweise am oberen Rand gegeben ist. Die Projektion ist weiter in Richtung auf eine Mittelachse beziehungsweise zentrale Achse des Rührgefäßes bezogen. Die Projektionsfläche ist dann in einer Unterfläche oder einer Aufstellfläche der Küchenmaschine angenommen.

Das oder die Bedienelemente, oder entsprechende Vorrichtungsteile der Küchenmaschine, sind in einer Ausgestaltung, bei Ausbildung eines Standteiles und eines Verstellteiles, im Bereich des Standteiles angeordnet. Alternativ ist die Anordnung des oder der Bedienelemente, oder entsprechender sonstiger Vorrichtungsteile der Küchenmaschine, im Verstellteil vorgesehen. Auch eine kombinierte Anordnung ist diesbezüglich möglich, sodass ein Teil von Bedienelementen im Standteil und ein Teil in dem Verstellteil vorgesehen ist.

Auch ist bevorzugt vorgesehen, dass das Standteil nur die Füße der Küchenmaschine und ein die Füße verbindendes Strukturteil aufweist. Das Strukturteil bildet in diesem Fall gleichsam einen Zweitboden der Küchenmaschine aus, zuzüglich zu dem Boden des Verstellteiles. Der Boden des Verstellteils ist entsprechend relativ zu dem Boden des Strukturteils bewegbar. Der Boden des Strukturteils braucht nicht geschlossen ausgebildet zu sein. Er kann auch im Sinne einer Verstrebung gebildet sein. Das Verstellteil weist in diesem Fall bevorzugt sämtliche Komponenten der Küchenmaschine auf, so insbesondere ein Gehäuse mit einer Bedienseite, einer Rührgefäßaufnahme mit dem Rührgefäß sowie mit dem Elektromotor zum Antrieb des Rührwerks.

Die gefundene Schwenkstellung des Rührgefäßes zusammen mit dem Rührwerk ist in bevorzugter Ausgestaltung festlegbar, so bspw. zufolge Eingriff durch den Benutzer. Beispielsweise ist diesbezüglich eine Verrastung oder Klemmfestsetzung gegeben. Eine solche Verrastung oder Klemmfestsetzung kann durch den Benutzer bewirkbar sein. Auch ist durch den Benutzer bevorzugt eine solche Verrastung oder Klemmfestsetzung aufhebbar. Alternativ ist in vorgegebenen Winkelausrichtungen eine zufolge Benutzereingriff überlaufbare Verrastung gegeben. Bevorzugt ist das Rührgefäß in verschiedenen Winkelstellungen festlegbar. So ist weiter bevorzugt eine Anpassung der Winkelausrichtung insbesondere an den Füllstand erreichbar.

Eine alternative Lösung sieht vor, dass die Rührwerkachse gegenüber der Rührgefäßachse im Sinne eines Kippens verstellbar ist. Die Rührgefäßachse ist hierbei bevorzugt senkrecht zu einer Arbeitsfläche, auf welcher die Küchenmaschine aufgestellt ist, ausgerichtet. Insbesondere die radial freien Enden der Rührwerkarme beschreiben hierbei mit Bezug auf den Rührgefäßboden einen Kreis mit einem Hochpunkt und einem Tiefpunkt.

Zur Erreichung der Kippbarkeit kann die Rührwerkachse beispielsweise als flexible Welle ausgebildet sein. Eine Wellenhalterung kann die Möglichkeit eröffnen, verschiedene, auch festsetzbare, Kippeinrichtungen einzustellen.

In weiterer Ausgestaltung kann auch vorgesehen sein, dass die Rührwerkachse, in einer gegebenen Kippstellung, umlaufend bezüglich der Rührgefäßachse gegeben ist. Ein Tiefpunkt, der durch die Rührwerkarme bei dieser Ausrichtung der Rührwerkachse erreicht werden kann, kann somit umlaufend bezüglich des Rührgefäßbodens beziehungsweise der Rührgefäßachse sein. Eine Realisierung hierzu kann durch ein zusätzliches Getriebe gegeben sein, über welches eine hiermit gegebene Kreiselbewegung der Rührwerkachse erreicht wird.

Im Zuge des Umlaufens kann weiter bevorzugt eine sich ändernde, insbesondere ständig ändernde Winkelstellung der Rührwerkachse relativ zu der Rührgefäßachse verwirklicht sein. Im Hinblick auf die üblicherweise bereits nahe am Rührgefäßboden gegebene Umlaufebene eines untersten Bereiches des Rührwerks kann schon eine Änderung im Bereich weniger Winkelgrade sinnvoll sein, beispielsweise im Bereich von 2 bis 10 Winkelgraden.

Bei einer anderen Ausgestaltung eines Rührgefäßes, bei welchem im üblichen Betrieb, d.h. mit koaxial verlaufender Rührwerkachse und Rührgefäßachse, der Abstand von Rührwerkarmen (am tiefsten Punkt) zu dem Rührgefäßboden größer ist, kann auch eine größere Winkelausrichtung, d.h. eine größere Zahl betreffend Winkelgrade, in dieser Hinsichtlich möglich sein. In Ausnahmefällen bis hin zu 45°.

Die sich ändernde Winkelstellung bedeutet, dass beispielsweise ausgehend von einer Verkippung der Rührwerkachse von 10° aus der Senkrechten überlagernd umlaufend eine sich ändernde Winkelstellung erfolgt. Bei einer sich ändernden Winkelstellung von 2° ergibt sich umlaufend eine Verkippung der Rührwerkachse wechselnd zwischen 8 und 12°.

Weiter nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: eine Küchenmaschine in partiellgeschnittener Seitenansicht, eine erste Ausführungsform betreffend;
- Fig. 2: die Draufsicht zu Figur 1;
- Fig. 3: eine der Figur 1 entsprechende Seitenansicht, jedoch eine verstellte Anordnung insbesondere eines Rührgefäßes der Küchenmaschine betreffend;
- Fig. 4: eine der Figur 3 entsprechende Seitenansicht, eine zweite Ausführungsform betreffend;
- Fig. 5: eine weitere der Figur 3 entsprechende Darstellung, betreffend eine dritte Ausführungsform; und
- Fig. 6: eine Darstellung einer Küchenmaschine mit zugeordnetem Unterlegteil.

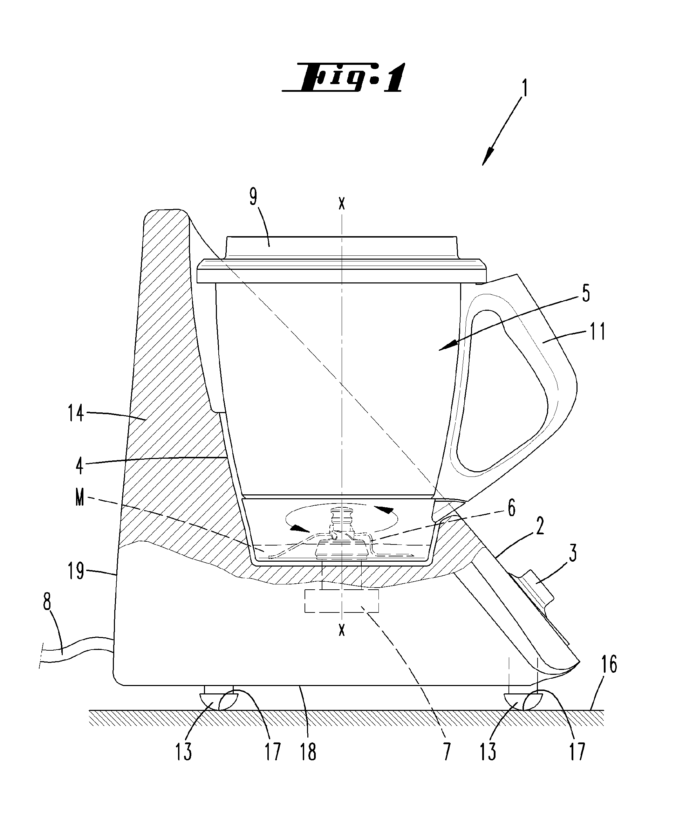

Dargestellt und beschrieben ist mit Bezug zur Figur 1 eine elektrisch betriebene Küchenmaschine 1. Diese weist zunächst eine Vorderseite mit einem Bedienfeld 2 auf mit bevorzugt einer Mehrzahl von Bedienelementen 3 in Form von Reglern und/oder Tastern.

Des Weiteren verfügt die Küchenmaschine 1 über eine Gefäßaufnahme 4. Das Rührgefäß 5 ist in seinem Fußbereich in der Gefäßaufnahme 4 bevorzugt formschlüssig aufnehmbar und halterbar.

Das Rührgefäß 5 ist bevorzugt im Wesentlichen rotationssymmetrisch ausgebildet, mit einer zentralen Rührgefäßachse x, die auch als Mittelachse des Rührgefäßes 5 angesprochen ist.

Im Bodenbereich weist das Rührgefäß 5 bevorzugt ein Rührwerk 6 auf. Dieses ist in der Zuordnungsstellung des Rührgefäßes 5 in der Gefäßaufnahme 4 bevorzugt formschlüssig gekoppelt mit einem in der Küchenmaschine 1 vorgesehenen Rührwerkantrieb in Form eines Elektromotors 7.

Die Elektroversorgung des Rührwerkantriebs sowie einer weiter bevorzugt in einem Bodenbereich des Rührgefäßes 5 vorgesehenen Heizung und darüber hinaus auch der elektrischen Steuerung der gesamten Küchenmaschine 1 ist über ein Netzanschlusskabel 8 erreicht.

Das Rührgefäß 5 ist weiter insbesondere bei Betrieb des Rührwerks 6 und/oder der Heizung durch einen Deckel 9 verschließbar. Der Deckel 9 weist bevorzugt zentral, die Rührgefäßachse x des Rührgefäßes 5 aufnehmend, eine Einfüllöffnung 10 auf, dies weiter bevorzugt bei insgesamt im Wesentlichen kreisscheibenförmigem Grundriss des Deckels 9.

Weiter bevorzugt ist das aus der Gefäßaufnahme 4 entnehmbare Rührgefäß 5 mit einem Griff 11 versehen. Der Griff 11 kann sich außenseitig der Gefäßwandung nahezu über die gesamte vertikale Erstreckung des Rührgefäßes 5 außerhalb der Rührgefäßaufnahme 4 erstrecken. Der Griff 11 ist weiter bevorzugt in einer Betriebsstellung auf der Vorderseite der Küchenmaschine 1, wo sich auch das Bedienfeld 2 befindet, angeordnet.

Insbesondere im Betrieb der Küchenmaschine 1, weiter insbesondere im Rührwerk- und/oder Heizbetrieb, ist der auf das Rührgefäß 5 aufgesetzte Deckel 9 bevorzugt mit dem Rührgefäß 5 verriegelt.

Die Rührwerkachse des Rührwerks 6 fällt in bevorzugter Ausgestaltung zusammen mit der Rührgefäßachse x, dies zufolge bevorzugter zentraler Anordnung des Rührwerks 6 im Bodenbereich des Rührgefäßes 5. Die Relativlage von Rührwerk 6 und Rührgefäß 5 und der zugehörigen Achsen kann nicht veränderbar vorgesehen sein.

Zwischen dem Rührwerk 6 und dem küchenmaschinenseitigen Elektromotor 7 bzw. dessen Abtriebswelle ist eine nicht dargestellte Kupplung vorgesehen, zur Trennung des Antriebs bei Entnahme des Rührgefäßes 5 aus der Gefäßaufnahme 4.

Weiter bevorzugt kann hinsichtlich des Antriebs für das Rührwerk 6 eine starre Antriebswelle zwischen Elektromotor 7 und Rührwerk 6 vorgesehen sein, sodass auch die Relativlage diese Abtriebswelle und darüber hinaus bevorzugt auch des Elektromotors zu dem Rührwerk 6 und hierüber zum Rührgefäß 5 unveränderbar ist.

Um auch bei einer geringen Füllmenge eines Mediums in dem Rührgefäß 5 eine ausreichende Durchmischung bzw. ausreichende Zerkleinerung des Mediums gegebenenfalls zu erreichen, kann mit einer der nachbeschriebenen Maßnahmen eine Erhöhung des Einflussbereich des Rührwerks 6 erreicht werden. Das Medium kann dann besser vom Rührwerk 6 erfasst werden.

Die Füllstandserhöhung des Mediums M auf einem Teil der Bodenfläche des Rührgefäßes 5 kann durch ein Kippen des Rührgefäßes 5 aus der Ausgangsstellung gemäß Figur 1 heraus erreicht werden.

Die Küchenmaschine 1 stützt sich bevorzugt über drei oder mehr Füße 13, welche unterseitig des Gehäuses 14 oder eines Festteiles 15 der Küchenmaschine 1, bevorzugt ausgehend von einer Unterfläche 18 der Küchenmaschine, angeordnet sind, auf einer Arbeitsfläche 16, bspw. einer Tischfläche ab. In üblicher Betriebsstellung gemäß der Darstellung in Figur 1 erstreckt sich die Rührgefäßachse x senkrecht zu dieser Arbeitsfläche 16 bzw. senkrecht zu einer durch die Auflagefläche der Füße 13 aufgespannten Aufstellebene.

Um den Einwirkungsbereich des Rührwerks 6 zu erhöhen, wird das Rührgefäß 5 derart gekippt, dass die Rührgefäßachse x die senkrechte Ausrichtung zur Aufstellfläche 16 verlässt.

Durch die formschlüssige Aufnahme des Rührgefäßes 5 in der Gefäßaufnahme 4 sowie die bevorzugte Unveränderbarkeit der Relativlage der Rührwerkachse zur Rührgefäßachse x, weiter bevorzugt auch des Elektromotors 7 zum Rührwerk 6, werden im Zuge des Verschwenkens des Rührgefäßes 5 aus der senkrechten Ausrichtung heraus entsprechend auch das Rührwerk 6, die Gefäßaufnahme 4 und bevorzugt der Elektromotor 7 mit seiner Abtriebswelle mit verschwenkt.

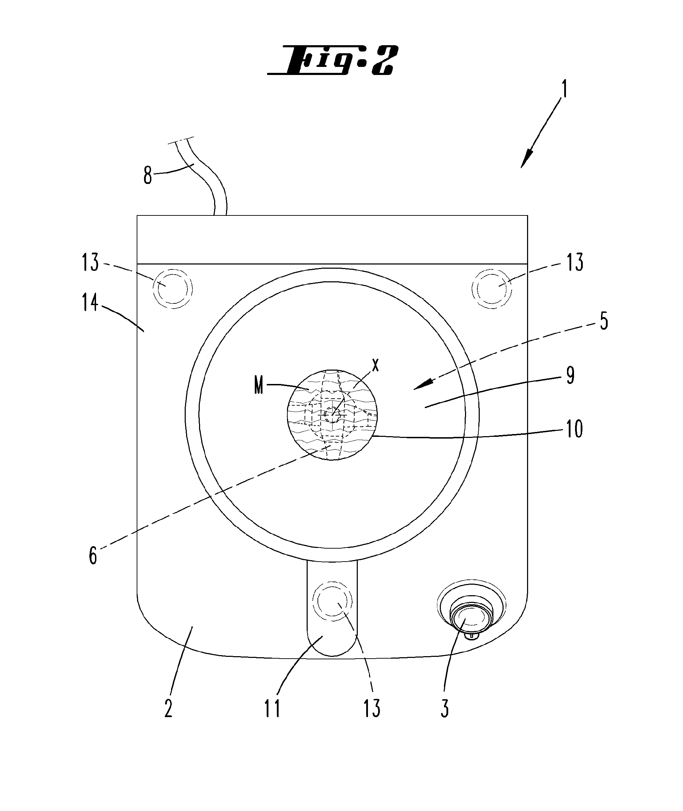

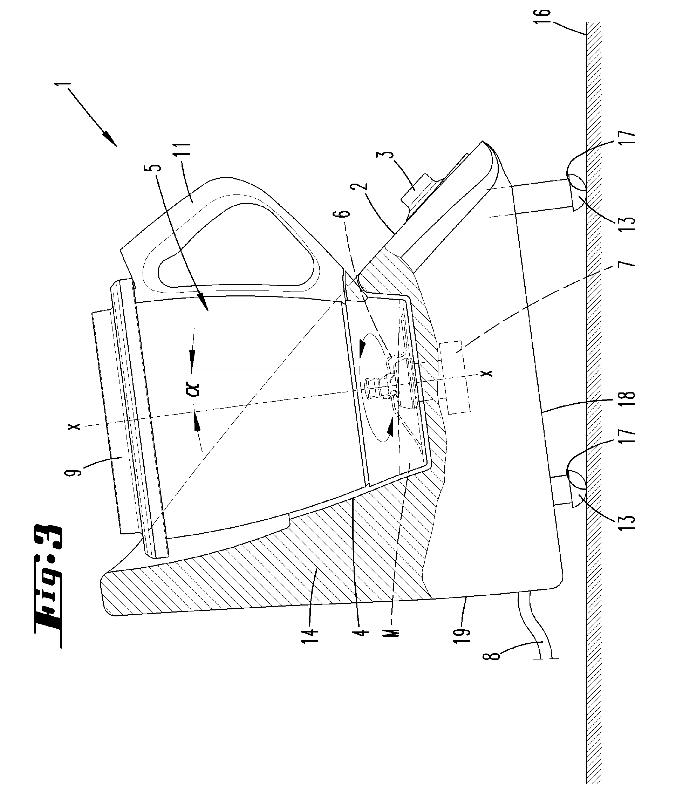

In einer ersten Ausführungsform gemäß den Darstellungen in den Figuren 1 bis 3 ist hierzu einer oder mehrere der Füße 13 der Küchenmaschine 1 höhenverstellbar ausgebildet. So ist bevorzugt ein oder mehrere der Füße 13, welche der Vorderseite der Küchenmaschine 1 zugewandt sind, teleskopierbar ausgebildet, sodass beispielsweise durch Drehen oder Auseinanderziehen des Fußes 13 in eine verlängerte Raststellung der Abstand zwischen der Auflagefläche 17 des Fußes 13 und der, der Aufstellfläche 16 zugewandten Unterfläche 18 der Küchenmaschine veränderbar ist (siehe auch Figur 3).

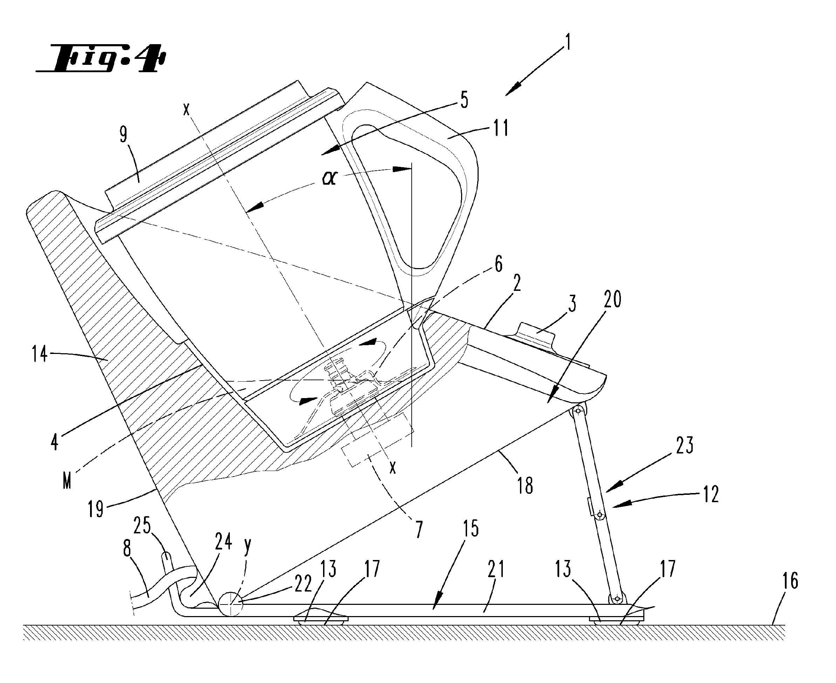

Entsprechend wird in dieser Ausführungsform die gesamte Küchenmaschine 1 inklusive des unter anderem die Gefäßaufnahme 4 und den Elektromotor 7 aufnehmenden Gehäuses 14 relativ zu der durch die Auflageflächen 17 der Füße 13 aufgespannten Ebene gekippt. In einer solchen verkippten Stellung ergibt sich eine Verstellung der Rührgefäßachse x aus der Senkrechten um einen spitzen Winkel α zu der Seite von beispielsweise 5° bis 10°. Das Medium M fließt hierdurch bedingt schwerkraftgetrieben in den vertikal unteren Bodenbereich des Rührgefäßes 5, so dass sich dort ein gegenüber einer üblichen vertikalen Ausrichtung des Rührgefäßes 5 höherer Füllstand ergibt. Das Medium M kann entsprechend besser durch das Rührwerk 6 zur Bearbeitung erfasst werden. Eine weitere Ausführungsform zeigt Figur 4. Hier ist die Küchenmaschine 1 unterteilt in ein Standteil 15 und ein Verstellteil 20.

Als Verstellteil 20 ist bevorzugt das Gehäuse 14 mit dem Bedienfeld 2 und der Gefäßaufnahme 4 vorgesehen. Insbesondere der Elektromotor 7 kann auch einbezogen sein. In üblicher Nutzungsstellung ist in der Gefäßaufnahme 4 das Rührgefäß 5 eingesetzt.

Das Standteil 15 ist bevorzugt ein Strukturteil 21 in Form einer bevorzugt die Kontur im Bereich der Unterfläche 18 des Gehäuses 14 aufnehmenden Platte. Unterseitig des Strukturteils 21 sind bevorzugt die Füße 13 befestigt.

Das Verstellteil 20 bzw. das Gehäuse 14 ist mit dem Standteil 15 über eine Verstellachse 22 verbunden. Eine geometrische Achse y der Verstellachse 22 kann sich quer zu der Rührgefäßachse x erstrecken.

Die Verstellachse 22 ist in dem Ausführungsbeispiel gemäß Figur 4 zugeordnet der Rückseite 19 der Küchenmaschine 1 vorgesehen, insbesondere in einem Übergangsbereich von der Rückseite 19 in einen Bodenbereich des Verstellteils 20.

Zum Verschwenken des Rührgefäßes 5 in der senkrecht zur Aufstellfläche sich erstreckenden und hierbei bevorzugt sowohl die Vorderseite als auch die Rückseite 19 der Küchenmaschine 1 durchsetzenden Verstellebene E wird das Verstellteil 20 der Küchenmaschine 1 bevorzugt im bodennahen Bereich des Bedienfeldes 2 erfasst und angehoben, was zu einer entsprechenden Verschwenkung um die Achse y führt. Die angehobene Stellung ist arretierbar, wozu in bevorzugter Ausgestaltung ein zwischen der Unterseite des Verstellteils 20 und der Oberseite des Standteils 15 vorgesehenes Gestänge 23 in eine gestreckte und hierbei sicherbare Stellung verbracht wird.

In der Stellung der Figur 4 erstreckt sich die Rührgefäßachse x in einem spitzen Winkel α von etwa 30° zu einer Senkrechten oder zu der Normalausrichtung der Rührgefäßachse gemäß der Stellung des Rührgefäßes 5 in Figur 1.

Für eine gegebenenfalls gewünschte weitere Stabilisierung dieser geneigten Stellung ist in einer bevorzugten Ausgestaltung ein im Bereich der Rückseite 19 ein Stützabschnitt 24 vorgesehen. Der Stützabschnitt 24 kann in einen entsprechend gegenausgeformten Aufnahmeabschnitt 25 des Standteils 15 sichernd eintreten (beispielsweise im Sinne einer Rastverbindung).

Zur Aufhebung der geneigten Rührgefäßstellung gemäß Figur 4 wird bevorzugt durch den Benutzer das zweigeteilte Gestänge 23 an einer als Kniegelenk ausgebildeten Gelenkstelle 12 in Richtung auf die Rückseite 19 gedrückt, wodurch die Selbsthaltung aufgehoben wird.

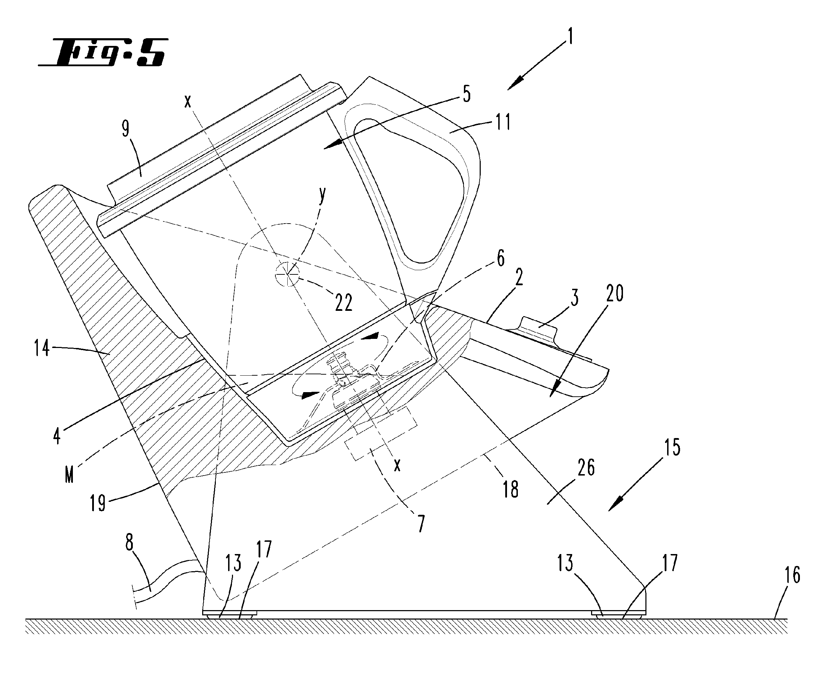

Eine weitere Ausführungsform zeigt Figur 5. Auch hier weist die Küchenmaschine 1 ein Standteil 15 und ein Verstellteil 20 auf, wobei das Verstellteil 20 schaukelartig in dem Standteil 15 aufgenommen ist.

Das Standteil 15 ist hierbei bevorzugt in einem Querschnitt quer zur Verstellebene E betrachtet U-förmig gestaltet, mit einem Bodenbereich, in welchem unterseitig die Füße 13 festgelegt sind, und mit zwei bevorzugt senkrecht hierzu ausgerichteten Wandabschnitten 26.

Die Verstellachse 22 ist hierbei jeweils in einem Wandabschnitt 26 ausgeformt, hierbei wiederum bevorzugt zusammenwirkend mit einem dem jeweiligen Wandabschnitt 26 zugewandten Gehäuseabschnitt des Verstellteils 20.

Die geometrische Achse y der Verstellachse 22 durchsetzt in entsprechender Zuordnungsstellung das Rührgefäß 5. Bevorzugt ist eine Anordnung gewählt, bei welcher die Achse y das Rührgefäß 5 etwa auf halber Höhe mit Bezug auf die Erstreckung der Rührgefäßachse x schneidet.

Durch die schaukelartige Aufhängung des insbesondere die zu verschwenkenden Komponenten aufweisenden Verstellteils 20 ist ein Kippen des aufgenommenen Rührgefäßes 5 in der Verstellebene E erreichbar.

Hierzu sind in einer Ausgestaltung überlaufbare Raststellungen vorgesehen, bspw. in 5°- oder 10°-Schritten. Auch kann diesbezüglich vorgesehen sein, dass lediglich eine festlegbare Schwenkstellung erreichbar ist, in welcher die Rührgefäßachse x bspw. einen spitzen Winkel α von etwa 30° zur ursprünglichen Vertikalausrichtung der Rührgefäßachse einnimmt.

In weiterer Ausgestaltung kann die Verschwenkung des Verstellteils 20 insbesondere bei der schaukelartigen Aufhängung auch elektromotorisch erfolgen. Dies bspw. zufolge einer Befehlseingabe durch den Benutzer.

Wie aus den Darstellungen zu erkennen, ist eine Verschwenkung der gesamten Küchenmaschine 1 oder des Verstellteils 20 in Richtung auf die Rückseite 19 bevorzugt. Alternativ oder auch kombinativ hierzu ist eine Verschwenkung in Richtung auf die Vorderseite oder in Richtung der Seitenwände möglich.

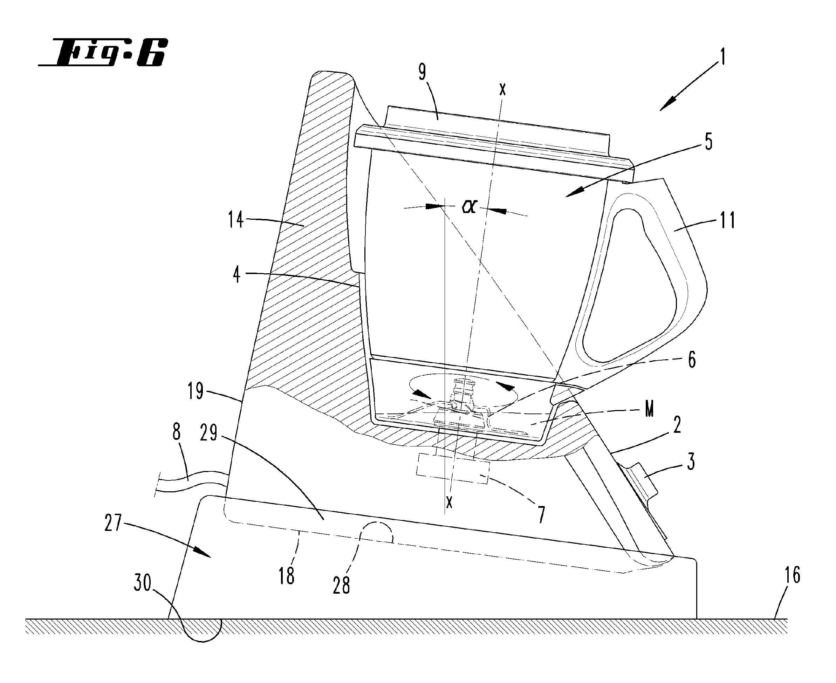

Figur 6 zeigt die Kombination einer elektromotorisch angetriebenen Küchenmaschine 1, insbesondere in einer der Ausgestaltungen, wie sie vorstehend beschrieben ist, weiter bevorzugt aber ohne jegliche Verstellmöglichkeit hinsichtlich der Rührgefäßachse zu der Achse des Rührwerks. Es ist eine Kombination mit einem Unterlegteil 27 vorgesehen. Das Unterlegteil 27 weist eine Aufstellfläche 28 auf, die hier gestrichelt wiedergegeben ist, da bei der Ausführungsform (als bevorzugte Gestaltung) von einem die Aufstellfläche 28 überragenden Randbereich 29 ausgegangen ist. Weiter weist das Unterlegteil 27 eine Unterfläche 30 auf, mit welcher das Unterlegteil 27 in üblicher Weise auf einer, weiter üblicherweise horizontal ausgerichteten, Arbeitsfläche aufstellbar ist. Die Aufstellfläche 28 und die Unterfläche 30 verlaufen in der dargestellten Seitenansicht der Kombination keilförmig zueinander.

Auch so kann, ohne dass Änderungen an der Küchenmaschine 1 selbst erforderlich sind oder besondere Maßnahmen zu treffen sind, eine Änderung der Ausrichtung der Rührgefäßachse x und damit die gewünschte einseitige Ansammlung von Flüssigkeit oder zu bearbeitendem Rührwerksgut in dem Rührgefäß erreicht werden. Auch hierdurch lässt sich entsprechend durch das Rührwerk dann eine günstigere Bearbeitung vornehmen.

Das Unterlegteil 27 und die Küchenmaschine 1 als solche sind bevorzugt zwei vollständig getrennte Teile, so dass bei Nichtgebrauch das Unterlegteil 27 entfernt von der Küchenmaschine 1 unterbringbar ist.

Die vorstehenden Ausführungen dienen der Erläuterung der von der Anmeldung insgesamt umfassten Erfindungen, die den Stand der Technik durch die folgenden Merkmalskombinationen jeweils eigenständig weiterbilden, nämlich:

Eine elektromotorisch angetriebene Küchenmaschine, die dadurch gekennzeichnet ist, dass das Rührgefäß zur Durchführung eines Rührvorganges, ggf. zusammen mit der Küchenmaschine im Übrigen, hinsichtlich der Ausrichtung der Rührwerkachse verstellbar vorgesehen ist.

Eine elektromotorisch angetriebene Küchenmaschine, die dadurch gekennzeichnet ist, dass das Rührgefäß zusammen mit dem das Rührwerk antreibenden Motor hinsichtlich der Ausrichtung der Rührwerkachse verstellbar ist.

Eine elektromotorisch angetriebene Küchenmaschine, die dadurch gekennzeichnet ist, dass in einer Ansicht quer zu einer Verstellrichtung die Verstellung bezogen auf die Rührwerkachse um mehr als 5° durchführbar ist.

Eine elektromotorisch angetriebene Küchenmaschine, die dadurch gekennzeichnet ist, dass die Küchenmaschine drei oder mehr Füße aufweist und dass zur Verstellung des Rührgefäßes jedenfalls ein Fuß verstellbar ist.

Eine elektromotorisch angetriebene Küchenmaschine, die dadurch gekennzeichnet ist, dass die Küchenmaschine ein Verstellteil und ein Standteil aufweist, wobei das Verstellteil zumindest das Rührgefäß mit dem Rührwerk und den Motor umfasst, und dass zu einer Veränderung der Ausrichtung der Rührwerkachse nur das Verstellteil zu verstellen ist.

Eine elektromotorisch angetriebene Küchenmaschine, die dadurch gekennzeichnet ist, dass das Verstellteil mit dem Standteil über eine Verstellachse bewegbar verbunden ist.

Eine elektromotorisch angetriebene Küchenmaschine, die dadurch gekennzeichnet ist, dass jedenfalls eine geometrische Achse der Verstellachse das Rührgefäß durchsetzt.

Eine elektromotorisch angetriebene Küchenmaschine, die dadurch gekennzeichnet ist, dass die Verstellachse unterhalb des Rührgefäßes verläuft.

Eine elektromotorisch angetriebene Küchenmaschine, die dadurch gekennzeichnet ist, dass die Küchenmaschine vorderseitig Bedienelemente aufweist und dass die Verstellachse zugeordnet einer Rückseite der Küchenmaschine verläuft.

Eine elektromotorisch angetriebene Küchenmaschine, die dadurch gekennzeichnet ist, dass das Standteil nur die Füße der Küchenmaschine und ein diese verbindendes Strukturteil aufweist.

### Bezugszeichenliste

| | | | |
|---|---|---|---|
| 1 | Küchenmaschine | 25 | Aufnahmeabschnitt |
| 2 | Bedienfeld | 26 | Wandabschnitt |
| 3 | Bedienelement | 27 | Unterlegteil |
| 4 | Gefäßaufnahme | 28 | Aufstellfläche |
| 5 | Rührgefäß | 29 | Randbereich |
| 6 | Rührwerk | 30 | Unterfläche |
| 7 | Elektromotor | | |
| 8 | Netzanschlusskabel | | |
| 9 | Deckel | | |
| 10 | Einfüllöffnung | | |
| 11 | Griff | | |
| 12 | Gelenkstelle | | |
| 13 | Fuß | x | Rührgefäßachse |
| 14 | Gehäuse | y | Achse |
| 15 | Standteil | | |
| 16 | Aufstellfläche | | |
| 17 | Auflagefläche | E | Verstellebene |
| 18 | Gehäuseboden, Unterfläche | M | Medium |
| 19 | Rückseite | | |
| 20 | Verstellteil | | |
| 21 | Strukturteil | α | spitzer Winkel |
| 22 | Verstellachse | | |
| 23 | Gestänge | | |
| 24 | Abstützabschnitt | | |

## Patentansprüche

1. Elektromotorisch angetriebene Küchenmaschine (1) mit einem Rührgefäß (5) und einem eine Rührwerkachse aufweisenden Rührwerk (6) in dem Rührgefäß (5), **dadurch gekennzeichnet, dass** das Rührgefäß (5) zur Durchführung eines Rührvorganges, ggf. zusammen mit der Küchenmaschine (1) im Übrigen, hinsichtlich der Ausrichtung der Rührwerkachse verstellbar vorgesehen ist.

2. Küchenmaschine nach Anspruch 1, **dadurch gekennzeichnet, dass** das Rührgefäß (5) zusammen mit dem das Rührwerk (6) antreibenden Motor (7) hinsichtlich der Ausrichtung der Rührwerkachse verstellbar ist.

3. Küchenmaschine nach einem der vorangehenden Ansprüche, **dadurch gekennzeichnet, dass** in einer Ansicht quer zu einer Verstellrichtung die Verstellung bezogen auf die Rührwerkachse um mehr als 5° durchführbar ist.

4. Küchenmaschine nach einem der vorangehenden Ansprüche, **dadurch gekennzeichnet, dass** die Küchenmaschine (1) drei oder mehr Füße (13) aufweist und dass zur Verstellung des Rührgefäßes (5) jedenfalls ein Fuß (13) verstellbar ist.

5. Küchenmaschine nach einem der vorangehenden Ansprüche, **dadurch gekennzeichnet, dass** die Küchenmaschine (1) ein Verstellteil (20) und ein Standteil (15) aufweist, wobei das Verstellteil (20) zumindest das Rührgefäß (5) mit dem Rührwerk (6) und den Motor (7) umfasst, und dass zu einer Veränderung der Ausrichtung der Rührwerkachse nur das Verstellteil (20) zu verstellen ist, und/oder, bevorzugt, dass das Verstellteil (20) mit dem Standteil (15) über eine Verstellachse (22) bewegbar verbunden ist.

6. Küchenmaschine nach einem der vorangehenden Ansprüche, **dadurch gekennzeichnet, dass** jedenfalls eine geometrische Achse der Verstellachse (22) das Rührgefäß (5) durchsetzt, und/ oder bevorzugt, dass die Verstellachse (22) unterhalb des Rührgefäßes (5) verläuft.

7. Küchenmaschine nach einem der vorangehenden Ansprüche, **dadurch gekennzeichnet, dass** die Küchenmaschine (1) vorderseitig Bedienelemente (3) aufweist und dass die Verstellachse (22) zugeordnet einer Rückseite (19) der Küchenmaschine (1) verläuft.

8. Küchenmaschine nach einem der vorangehenden Ansprüche, **dadurch gekennzeichnet, dass** das Standteil (15) nur die Füße (13) der Küchenmaschine (1) und ein diese verbindendes Strukturteil (21) aufweist.

9. Elektromotorisch angetriebene Küchenmaschine nach einem der vorangehenden Ansprüche, **gekennzeichnet durch** die kennzeichnenden Merkmale eines der vorhergehenden Ansprüche.

10. Kombination aus einer elektromotorisch angetriebenen Küchenmaschine, die ein Rührgefäß und ein Rührwerk mit einer Rührwerkachse aufweist, und einem Unterlegteil, das eine Aufstellfläche für die Küchenmaschine und eine Unterfläche aufweist, **dadurch gekennzeichnet, dass** die Aufstellfläche des Unterlegteils bezüglich der Unterfläche keilförmig verläuft.
